# EUROPEAN PATENT APPLICATION

(11) **EP 0 971 165 A2**
(43) Date of publication of application: **12.01.2000**
(21) Application number: 99304354.6
(22) Date of filing: 03.06.1999
(51) Int. Cl.: F16N 7/30

(54) **Pumpless liquid dispensing system**

(30) Priority: 12.06.1998 US 96658
(71) Applicant: ILLINOIS TOOL WORKS INC., Glenview, Illinois 60025 (US)
(72) Inventor: Kwok, Kui-Chiu, Mundelin, Lake County Illinois 60060 (US)
(74) Representative: Rackham, Stephen Neil

(57) **Abstract**

A liquid supply system and method for dispensing micro-amounts of liquids from a dispensing nozzle (20) having an inner liquid dispensing opening (24) and a coaxial outer air dispensing opening (28) by supplying liquid from a sealable liquid reservoir (30) to the dispensing nozzle (20) with pressurized air, supplying pressurized air to the dispensing nozzle (20), adjustably controlling liquid supplied from the dispensing nozzle (20) with a liquid flow control valve (60,80), and adjustably controlling pressurized air supplied from the dispensing nozzle with an air flow control valve (70,80), whereby micro-amounts of liquid are accurately dispensable continuously from the dispensing nozzle (20) and deposited uniformly.

## Description

The invention relates generally to liquid supply systems and methods therefor, and more particularly to systems and methods for accurately dispensing lubricating liquids from dispensing nozzles.

Liquid supply systems for accurately dispensing micro-amounts of lubricating liquids from dispensing nozzles are known generally and used widely, for example to provide lubrication and cooling in machining operations. The lubricating liquids are supplied typically at a rate of approximately one fluid ounce (23 ml) over an eight hour period, more or less depending on the particular lubricating liquid and on the application requirements. Liquids suitable for lubricating machining operations include the ACCU-LUBE line of lubricating products available from ITW Fluid Products Group, Norcross, Georgia, USA.

U.S-A-4,345,668 discloses a liquid metering system comprising generally a pneumatic liquid injector pump driven by a stream of air pulses to supply lubricant from a dispensing nozzle in corresponding intermittent pulses. Although the intermittent lubricant pulses supplied by the pneumatic pump are controllable variably, it is desirable in many applications to provide a relatively continuous supply of lubricant, which is deposited more uniformly on the workpiece. Also, the pneumatic pump and more particularly the stream of air pulses supplied thereto is controlled by an air logic device, which represents a substantial expense. This exemplary pneumatic pump operated liquid metering system is available under the ACCU-LUBE line of applicator products available from ITW Fluid Products Group, Norcross, Georgia, USA.

According to one aspect of this invention a pumpless liquid supply system useable for dispensing micro-amounts of lubricating liquids, comprises:
a sealable liquid reservoir fillable partially with liquid, the liquid reservoir having an air inlet and a liquid outlet;
a first pressurized air supply line coupled to the, air inlet of the liquid reservoir and supplying pressurized air thereto for supplying liquid from the liquid outlet thereof;
a dispensing nozzle;
a second pressurized air supply line coupled to the dispensing nozzle for supplying pressurized air thereto;
an air flow control valve coupled to the second pressurized air supply line for adjustably controlling pressurized air supplied from the dispensing nozzle;
a liquid dispensing supply line coupled to the liquid outlet of the liquid reservoir and to the dispensing nozzle for supplying liquid thereto; and
a liquid flow control valve coupled to the liquid supply line for adjustably controlling liquid supplied from the dispensing nozzle,
whereby micro-amounts of lubricating liquids are dispensable from the dispensing nozzle.

According to another aspect of this invention a method for dispensing micro-amounts of liquid from a pumpless liquid supply system, comprises: supplying liquid from a sealable liquid reservoir to a dispensing nozzle with pressurized air supplied to the liquid reservoir; supplying pressurized air to the dispensing nozzle; controlling liquid supplied from the dispensing nozzle with a liquid flow control valve; and controlling pressurized air supplied from the dispensing nozzle with an air flow control valve, whereby micro-amounts of lubricating liquids are dispensable continuously from the dispensing nozzle.

A particular embodiment of a liquid supply system in accordance with the present invention will now be dfescribed with reference to the accompanying drawings; in which:-
Figure 1 is a schematic diagram of a liquid supply system useable for dispensing micro-amounts of lubricating liquids from a dispensing nozzle;
Figure 2a is a partial sectional view of an adjustable control valve of the system in a relatively opened configuration;
Figure 2b is a partial sectional view of an adjustable control valve of the system in a relatively closed configuration;
Figure 3a is a partial sectional view of an on/off control valve of the system in an opened configuration; and,
Figure 3b is a partial sectional view of an on/off control valve of the system in a closed configuration.

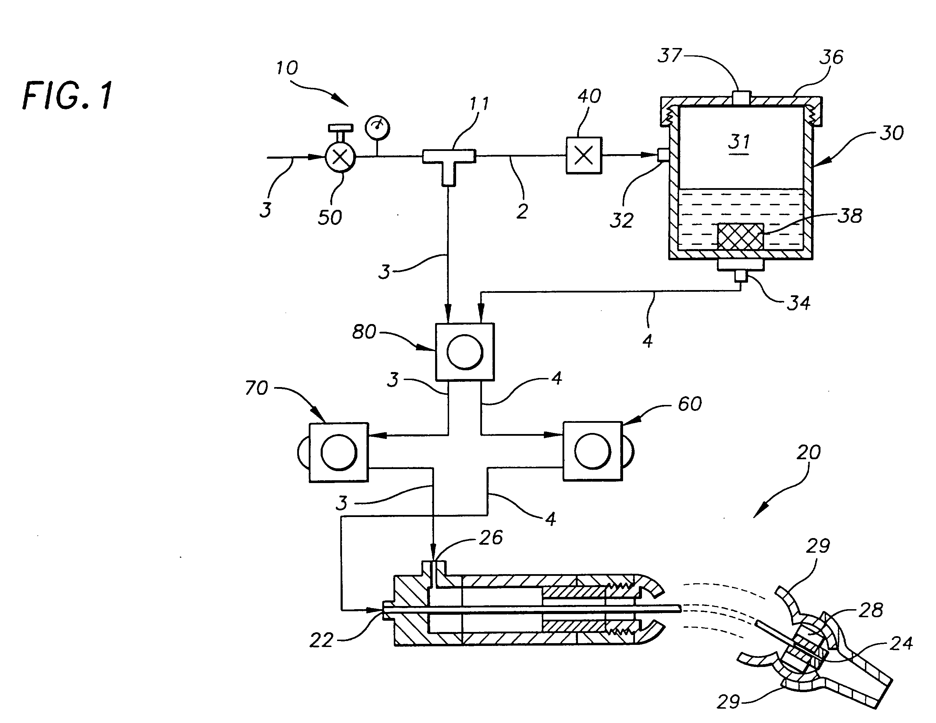

Figure 1 is a pumpless liquid supply system 10 useable for dispensing micro-amounts of lubricating liquids, for example from a dispensing nozzle 20 to provide lubrication in machining operations. The system 10 comprises generally a sealable liquid reservoir 30 having an air inlet 32 and a liquid outlet 34. The liquid reservoir 30 is fillable partially with liquid, and for this purpose includes preferably a removable lid or cover 36 sealingly coupled thereto, for example by screw threads and an o-ring type sealing member, not shown but known generally. A liquid filter 38 is also disposed preferably proximate the liquid outlet 34 thereof to filter liquid supplied therefrom.

A first pressurized air supply line 2 is coupled to the air inlet 32 of the liquid reservoir 30 and supplies pressurized air thereto for supplying liquid from the liquid outlet 34 thereof. The pressurized air is supplied more particularly to an air chamber 31 in the liquid reservoir 30, which is pressurizable to provide a continuous supply liquid from the liquid reservoir 30 to the dispensing nozzle 20. A first pressure regulator 40 disposed along the first pressurized air supply line 2 regulates the pressurized air supplied to the liquid reservoir 30 at a first pressure. In the exemplary embodiment, the first regulator 40 is a non-adjustable, fixed pressure regulator, and in one embodiment suitable for a lubricating applications, the first pressure is approximately 5 psi (35 KPa). A pressure relief valve 37 is preferably, disposed on the sealable liquid reservoir 30 to relieve any excess pressure that may accumulate therein for safety.

Figure 1 illustrates a second pressurized air supply line 3 coupled to the dispensing nozzle 20 for supplying pressurized air thereto, and a second pressure regulator 50 is disposed along the second pressurized air supply line 3 to regulate the pressurized air supplied to the dispensing nozzle 20 at a second pressure. In the exemplary embodiment, the second pressurized air supply line 3 is coupled to the first pressurized air supply line 2 by a tee connector 11, and in the exemplary configuration the second pressure is greater than the first pressure.

Figure 1 illustrates a liquid dispensing supply line 4 coupled to the liquid outlet 34 of the liquid reservoir 30 and to the dispensing nozzle 20 for supplying liquid thereto. The dispensing nozzle 20 has a liquid inlet 22 coupled to an inner liquid dispensing opening 24 thereof, and an air inlet 26 coupled to an outer pressurized air dispensing opening 28 disposed coaxially about the liquid dispensing opening 24. Liquid flow from the inner liquid dispensing opening 24 is thus controlled by the coaxial flow of air disposed thereabout and dispensed from the outer air dispensing opening 28, as is known generally. The exemplary dispensing nozzle 20 has a plurality of flexibly coupled, interlocking components 29 to provide an adjustable dispenser known commercially as a LOC-LINE nozzle, which is available from ITW Liquid Products Group, Norcross, Georgia. Other liquid dispensing nozzles may be used alternatively and are equivalents to the exemplary dispensing nozzle 20.

Figure 1 illustrates a liquid flow control valve 60 coupled to the liquid supply line 4 for adjustably controlling liquid supplied from the dispensing nozzle 20, and an air flow control valve 70 coupled to the second pressurized air supply line 3 for adjustably controlling pressurized air supplied from the dispensing nozzle 20, whereby micro-amounts of lubricating liquids are dispensable from the dispensing nozzle 20.

Figure 1 also illustrates a common liquid and air turn-off valve 80 coupled to the air and liquid supply lines 3 and 4, whereby the air and liquid supplies may be closed and opened without affecting the adjustment of the flow control valves 60 and 70.

Generally, the supply of liquid from the dispensing nozzle 20 is accurately controlled by adjustably clamping and releasing the liquid supply line 4 between a first movable body member and a first fixed body member of the liquid flow control valve 60, and the supply of air from the dispensing nozzle 20 is accurately controlled by adjustably clamping and releasing the air supply line 3 between a second movable body member and a second fixed body member of the air flow control valve 70.

The air and liquid supply lines 3 and 4 are preferably flexible tubular members, and in one exemplary embodiment suitable for lubricating machining operations, the tubular members have a Shore hardness rating between approximately 40 and approximately 60, although this hardness range may be more or less, depending on the particular application. The tubular members typically have an outer diameter of ½ inch or ⅛ inch, (12 mm or 3 mm) more or less depending again on the particular application.

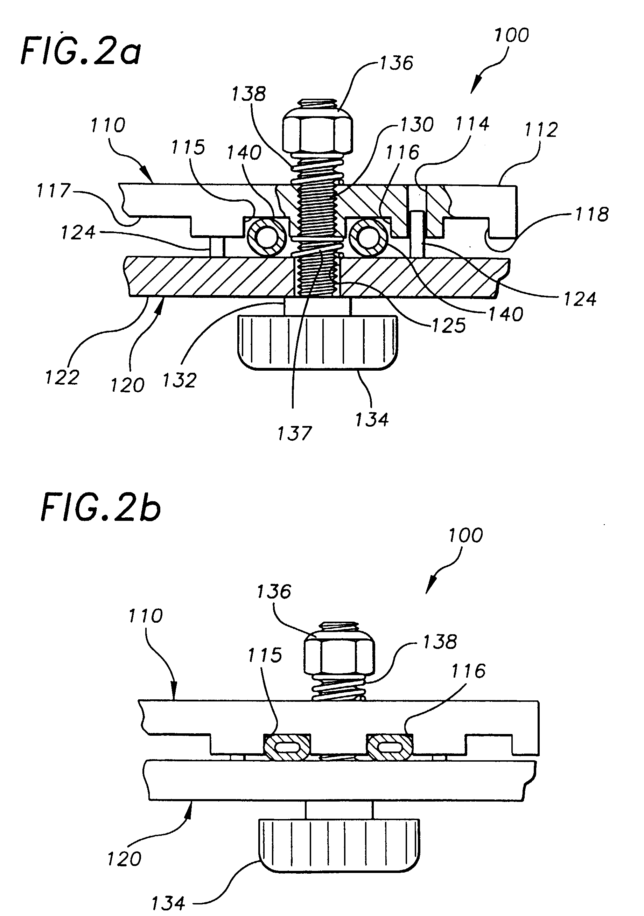

Figures 2a and 2b illustrate in greater detail an exemplary flow control valve 100 suitable for adjustably controlling the flow of air and liquid in the liquid supply system 10 of Figure 1. The flow control valve 100 comprises generally a movable body member 110 adjustably movable relative to a fixed body member 120, which may be for example a panel of a housing. The movable body member 110 is coupled to the fixed body member 120 by a threaded shaft 130 disposed through and threadably engaged with the movable body member 110. The threaded shaft 130 is also disposed through an opening 125 in the fixed body member 120, but is not threadably engaged therewith to permit free rotation therethrough. Figures 2a and 2b illustrate that as the threaded shaft 130 is rotated, the movable body member 110 is moved adjustably toward or away from the fixed body member 120 to adjustably clamp the tubular member 140 therebetween to adjustably control liquid or air flow therethrough.

The threaded shaft 130 includes a shoulder portion 132 bearing against an outer side 122 of the fixed body member 120. The resiliency of the tubular members 140 tend to bias the movable body member 110 away from the fixed body member 120, although a compressed coil spring 137 may be disposed between the movable body member 110 and the fixed body member 120 to supplement this effect. One or more guide pins 124 extend from the fixed body member 120 and into corresponding openings 114 in the movable body member 110 to prevent rotation of the movable body member 110 during rotation of the threaded shaft 130. The threaded shaft 130 preferably has relatively fine screw threads, for example between approximately 20 and approximately 60 threads per inch, (approximately between 1 and 3 threads per mm) to provide for precise adjustment thereof.

In the exemplary embodiment, the threaded shaft 130 includes a knob 134 disposed adjacent the shoulder portion 132 on the outer side thereof to facilitate rotation of the threaded shaft 130. A washer may be disposed alternatively between the shoulder portion 132 and the outer side 122 of the fixed body member 120 to reduce frictional wear therebetween. An opposing end of the threaded shaft 130 preferably includes a lock nut or other retaining member 136 disposed thereabout to prevent inadvertent separation and disassembly of the movable body member 110. A second coil spring 138 may be disposed between the lock nut and an outer surface 112 of the movable body member 110 to provide additional friction or drag on the threaded shaft during rotation thereof.

Figures 2a and 2b also illustrate the tubular members 140 disposed in a channel formed in the movable body member 110 between the movable body member 110 and the fixed body member 120, although the channel may be disposed more generally in either or both the movable body member 110 and the fixed body member stressing thereof that may otherwise occur during clamping. In the exemplary embodiment, the channel includes first and second channel portions 115 and 116 disposed on generally opposing sides of the threaded shaft 130 by looping the tubular member partially thereabout, as illustrated best in Figure 1, thereby balancing the forces on the movable body member 110. Providing multiple channel portions for accommodating the tubular member also increases the compressible length of the tubular member 140, which improves the sensitivity of flow control. Figure 2a also illustrates first and second outer channel portions 117 and 118 located radially outwardly of the first and second channel portion 115 and 116 further increasing the compressible length of the tubular member 140, whereby the tubular member 140 would be generally coiled about the threaded shaft 130 when located also in the outer channel portions 117 and 118, not shown to simplify the drawing.

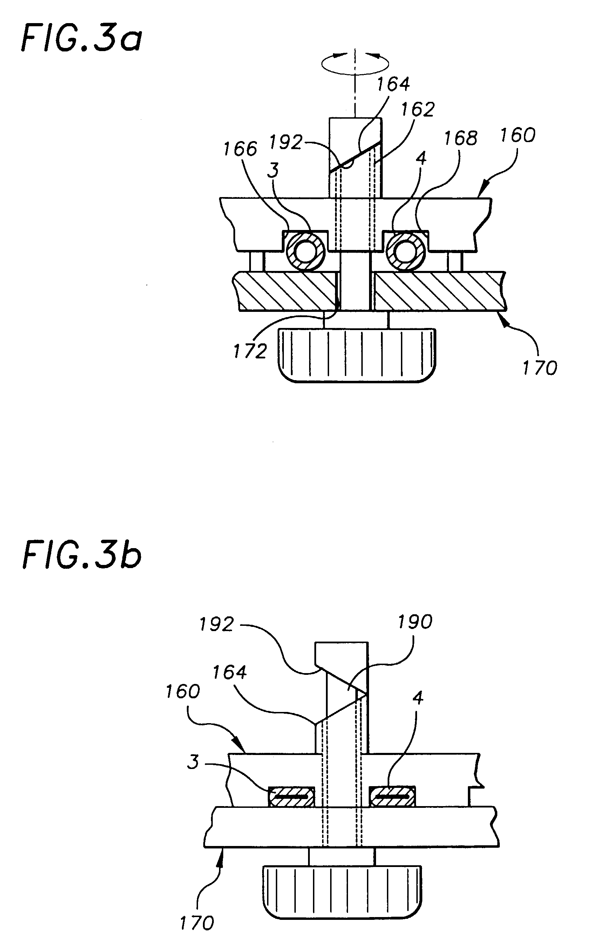

Figures 3a and 3b illustrate an exemplary liquid and air on/off valve 80 coupled to both the air and liquid supply lines 3 and 4, whereby the air and liquid supplies may be closed and opened without affecting the adjustment of the flow control valves 60 and 70. The valve 80 includes generally a movable body member 160 movable relative to a fixed body member 170. The movable body member 160 is coupled to the fixed body member 170 by a shaft 190 disposed through openings 162 and 172 therein, but not threadably engaged therewith.

In the exemplary embodiment, the shaft 190 has a camming surface 192 engageable with a complementary camming surface 164 on the movable body member 160. Rotation of the shaft 190, and more particularly engagement of the camming surface 192 with the camming surface 164 moves the movable body member 160 toward and away from the fixed body member 170 to close and open the air and liquid supply lines 3 and 4 by clamping and releasing the liquid and air supply lines between the movable body member 160 and the fixed body member 170.

The resiliency of the liquid and air supply lines 3 and 4 tends to bias the movable body member 160 away from the fixed body member 170, although a compressed coil spring may be disposed therebetween to supplement this effect, as discussed above and illustrated in Figure 2a. One or more guide pins extend from the fixed body member 170 and into corresponding openings in the movable body member 160 to prevent rotation of the movable body member 160 during rotation of the shaft 190, also discussed above. The liquid and air supply lines 3 and 4 are preferably disposed in corresponding channels 166 and 168 formed in either or both the movable body member 160 and the fixed body member 170 to locate and retain the supply lines 3 and 4 therebetween and to prevent over-stressing thereof during clamping as discussed above.

## Claims

1. A pumpless liquid supply system useable for dispensing micro-amounts of lubricating liquids, comprising:
a sealable liquid reservoir (30) fillable partially with liquid, the liquid reservoir having an air inlet (32) and a liquid outlet (34);
a first pressurized air supply line (2) coupled to the, air inlet (32) of the liquid reservoir (30) and supplying pressurized air thereto for supplying liquid from the liquid outlet (34) thereof;
a dispensing nozzle (20);
a second pressurized air supply line (3) coupled to the dispensing nozzle (20) for supplying pressurized air thereto;
an air flow control valve (70,80) coupled to the second pressurized air supply line (3) for adjustably controlling pressurized air supplied from the dispensing nozzle (20);
a liquid dispensing supply line coupled to the liquid outlet (34) of the liquid reservoir (30) and to the dispensing nozzle (20) for supplying liquid thereto; and
a liquid flow control valve (60,80) coupled to the liquid supply line (4) for adjustably controlling liquid supplied from the dispensing nozzle (20),
whereby micro-amounts of lubricating liquids are dispensable from the dispensing nozzle (20).

2. A system according to claim 1, further comprising the liquid supply line (4) is a flexible liquid tubular member, the liquid flow control valve (60) includes a first movable body member adjustably movable relative to a first fixed body member, the first movable body member adjustable toward and away from the first fixed body member to clamp and release the liquid supply line (3).

3. A system according to claim 1 or 2, further comprising the second air supply line (3) is a flexible air tubular member, and the air flow control valve (70) includes a second movable body member adjustably movable relative to a second fixed body member, the second movable body member adjustable toward and away from the second fixed body member to clamp and release the air supply line.

4. A system according to claim 2 or 3, further comprising the first and/or second movable body member coupled to the first and/or second fixed body member by a threaded shaft disposed through and threadably engaged with the first and/or second movable body member, the liquid or air supply line disposed in first and second liquid channel portions formed on generally opposing sides of the threaded shaft and between the first and/or second movable body member and the first and/or second fixed body member, the threaded shaft rotatable to move the first and/or second movable body member toward and away from the first and/or second fixed body member.

5. A system according to any one of the preceding claims, further comprising the air (3) and liquid (4) supply lines are flexible liquid tubular members, a third movable body member movable relative to a third fixed body member, the air supply line (3) disposed in an air channel formed between the third movable body member and the third fixed body member, and the liquid supply line (4) disposed in a liquid channel formed between the third movable body member and the third fixed body member, the third movable body member movable toward and away from the third fixed body member to close and open the air and liquid supply lines.

6. A method for dispensing micro-amounts of liquid from a pumpless liquid supply system, comprising: supplying liquid from a sealable liquid reservoir (30) to a dispensing nozzle (20) with pressurized air supplied to the liquid reservoir; supplying pressurized air to the dispensing nozzle (20); controlling liquid supplied from the dispensing nozzle (20) with a liquid flow control valve (60,80); and controlling pressurized air supplied from the dispensing nozzle with an air flow control valve (70,80), whereby micro-amounts of lubricating liquids are dispensable continuously from the dispensing nozzle (20).

7. A method according to claim 6, further comprising accurately controlling the supply of liquid from the dispensing nozzle (20) by adjustably clamping and releasing the liquid supply line (4) between a movable body member and a fixed body member.

8. A method according to claim 6 or 7, further comprising accurately controlling the supply of air from the dispensing nozzle (20) by adjustably clamping and releasing the air supply line (3) between a movable body member and a fixed body member.

9. A method according to claim 7 or 8, further comprising adjustably clamping and releasing the liquid or air supply line (3,4) disposed in first and second channel portions formed between the movable body member and the fixed body member.

10. A method according to any one of claims 6 to 9, further comprising clamping and releasing the liquid (4) and air supply (3) lines between a third movable body member and a third fixed body member to close and open the liquid (4) and air (3) supply lines.
